# EUROPÄISCHE PATENTSCHRIFT

(11) **EP 0 443 422 B1**
(45) Veröffentlichungstag und Bekanntmachung des Hinweises auf die Patenterteilung: **28.06.1995**
(21) Anmeldenummer: 91101980.0
(22) Anmeldetag: 13.02.1991
(51) Int. Cl.: G01B 5/00, B23Q 1/25

(54) **Koordinatenmessgerät**
Coordinate-measuring device
Dispositif de mesure de coordonnées

(30) Priorität: 20.02.1990 DE 4005292
(43) Veröffentlichungstag der Anmeldung: 28.08.1991
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Breyer, Karl-Hermann, Dr., W-7920 Heidenheim (DE); Herzog, Klaus, W-7082 Oberkochen (DE); Leitenberger, Werner, W-7920 Heidenheim-Mergelstetten (DE); Ohnheiser, Rainer, Dr., W-7329 Lauterstein 2 (DE)

(56) Entgegenhaltungen:
- DE-A- 2 054 405
- GB-A- 2 191 000
- ZWF - Zeitschrift für wirtschaftliche Fertigung & Automatisierung, Bd. 82, Nr. 9, September 1987, München, BRD, Seiten S 154-S 158, P. JENZER 'Der Messroboter zur Steuerung der flexiblen Fertigung'
- PATENT ABSTRACTS OF JAPAN vol. 10, no. 60 (P-435)(2117) 11. März 1986 & JP-A-60 204 016

## Beschreibung

### Koordinatenmeßgerät

Mehrkoordinatenmeßgeräte gibt es in den verschiedensten Ausführungsformen. Eine Übersicht über die unterschiedlichen Bauformen gibt der Artikel von M. Dietsch und H. Lang in "Feinwerktechnik und Meßtechnik 86" (1978) Seite 262-269. Allen darin beschriebenen Geräten liegt im Prinzip der gleiche Aufbau zugrunde: Die Geräte bestehen aus drei senkrecht zueinander angeordneten und aufeinander aufbauenden Führungen, längs derer der Tastkopf linear verschiebbar ist, sowie drei den Führungen zugeordneten Maßstäben.

Es sind auch Koordinatenmeßgeräte bekannt, die nicht in einem kartesischen Koordinatensystem, sondern in Kugel- oder Zylinderkoordinaten messen. So ist z.B. in der GB-PS 14 98 009 ein Koordinatenmeßgerät beschrieben, bei dem der Tastkopf mittels dreier hintereinander angeordneter Gelenke beweglich gehalten ist. Die Lage des Tastkopfes wird bei diesem Gerät mit Hilfe von in den Gelenken angeordneten Winkelgebern festgestellt. Ein ähnlich aufgebautes Koordinatenmeßgerät ist aus der US-PS 42 40 205 bekannt. Bei diesem Gerät ist der Tastkopf an einer vertikal verschiebbaren Pinole befestigt, die ihrerseits über drei Gelenke mit vertikal angeordneter Drehachse in einer Ebene geführt ist. Die Lage der Pinole in der Ebene wird mit Hilfe eines Maßstabs und eines Drehgebers gemessen.

Es ist schwierig, mit diesen Geräten hochgenaue Messungen durchzuführen, da die einzelnen Teile des Gelenkarmes während eines Meßvorganges aufgrund der von der Tastkopfposition abhängigen effektiven Länge des Gelenkarmes wechselnden Lastverhältnissen ausgesetzt sind und sich deshalb deformieren, wobei die Deformation in einer Achse von den Stellungen der Teile des Gelenkarms in den anderen Achsen abhängen.

Aus der EP-A-0 342 267 ist ein Koordinatenmeßgerät in Form eines Ständers bekannt, der den in der Vertikalen verschiebbaren Tastkopf trägt und von Hand in einer Ebene beweglich geführt und auch um seine Längsachse gedreht werden kann. Es ist jedoch nicht ohne weiteres möglich, dieses bekannte Gerät mit Antrieben auszurüsten. In einer darin auch beschriebenen motorisierten Version ist der Ständer mittels zweier linear wirkender Antriebe in den waagerechten Koordinaten (x) und (y) bewegbar und das zu vermessende Werkstück auf einem Drehtisch angeordnet. Dieses Gerät besitzt jedoch einen wenig kompakten Aufbau und es ist schwer, die weit außerhalb des Schwerpunktes des Ständers angreifenden Antriebskräfte der y-Achse unter Vermeidung von Biegemomenten auf den verschiebbaren Ständer zu übertragen.

In der GB-A-2 191 000 ist ein Koordinatenineßgerät mit drei linearen Meßachsen beschrieben, das einen um eine vertikale Achse drehbaren Ständer besitzt. Durch Drehung des Ständers kann der Meßarm des Gerätes in zwei verschiedene Meßbereiche verschwenkt werden. Als Meßachse ist diese Drehachse jedoch nicht ausgebildet.

Es ist die Aufgabe der vorliegenden Erfindung, ein Koordinatenmeßgerät zu schaffen, das einen möglichst einfachen, dabei aber stabilen Aufbau besitzt und genaue Messungen ermöglicht. Diese Aufgabe wird mit den im Anspruch 1 angegebenen Merkmalen gelöst.

Das Koordinatenmeßgerät gemäß der Erfindung besitzt nur zwei lineare Achsen, die sonst übliche dritte lineare Achse ist durch ein Drehlager ersetzt. Hochgenaue Drehlager lassen sich mit bedeutend geringerem Aufwand herstellen als Linearführungen in den für Koordinatenmeßgeräte üblichen Längen und Anforderungen an die Führungsgenauigkeit. Wechselnde Momente treten beim Messen nicht auf, da der Meßarm des Gerätes starr ist bzw. seine Länge konstant ist.

Da der Ständer, der den Meßarm trägt, nur in einer Koordinatenrichtung verfahren wird und die Bewegung des Tastkopfes in der zweiten waagerechten Richtung durch eine Drehbewegung des Ständers herbeigeführt wird, kann das gesamte Koordinatenmeßgerät sehr kompakt gebaut werden. Außerdem gehen in die infolge der Drehung zu bewegenden Trägheitsmomente im wesentlichen nur der Meßarm und der Tastkopf ein, so daß in dieser Meßrichtung relativ hoch beschleunigt und Schnell gemessen werden kann.

Es ist zweckmäßig, wenn das Koordinatenmeßgerät einen Drehtisch enthält, auf dem das zu vermessende Werkstück um eine zweite Achse drehbar ist. Hierbei soll die Verbindungslinie der beiden Drehachsen - der des Ständers und der des Drehtisches - im wesentlichen parallel zur Antriebsrichtung des Schlittens liegen, der den Ständer auf den Drehtisch zubewegt. Mit diesen Maßnahmen lassen sich auch sehr große Werkstücke ohne Umladen optimal vermessen und aufgrund der zweiten, mit Hilfe des Drehtisches realisierten Achse ist es bedeutend einfacher, die Meßbewegung des Tastkopfs senkrecht zur Führungsrichtung des Schlittens zu realisieren. Denn diese Meßbewegung kann durch eine Überlagerung der beiden Drehbewegungen, der des Ständers und der des Werkstücktisches zusammengesetzt werden. Hierzu besitzt das Koordinatenmeßgerät vorteilhaft eine Steuerung, die so programmiert ist, daß sie die beiden Drehbewegungen in der gewünschten Weise koordiniert.

Bezüglich seiner Drehbewegung kann der Ständer radial und achsial in dem linear geführten Schlitten gelagert sein. In diesem Falle ist es möglich, das Achsiallager ebenso wie das Radiallager in Wälzlagertechnik aufzubauen.

Besonders vorteilhaft ist es jedoch, wenn der Ständer im Schlitten bezüglich der Drehbewegung allein radial gelagert ist und sich achsial auf einem die Führung für den Schlitten tragenden Geräteteil abstützt. Dies hat einen besonders stabilen Aufbau zur Folge, da die Drehachse dann bezogen auf das Achsiallager von dem Schlitten unabhängig ist und vielmehr direkt vom feststehenden Maschinentisch getragen wird. Da in diesem Falle das Achsiallager ein Flächenlager sein muß, kommen hierfür Luftlager zum Einsatz, mit denen sich eine sehr große Basis in der waagerechten Ebene erzielen läßt. Das ergibt einen gegen Verkippung stabilen Aufbau.

Weitere Vorteile der Erfindung ergeben sich aus der nachfolgenden Beschreibung von Ausführungsbeispielen anhand der Figuren 1-7 der beigefügten Zeichnungen.
- Figur 1 und 2: Sind Skizzen, die ein erstes Ausführungsbeispiel für ein Koordinatenmeßgerät gemäß der Erfindung im Schnitt in einer vertikalen Ebene (Figur 1) bzw. in Aufsicht bei abgenommener Verkleidung (Figur 2) zeigen;
- Figur 3 und 4: sind Skizzen, die ein zweites Ausführungsbeispiel für ein Koordinatenmeßgerät gemäß der Erfindung im Schnitt in einer vertikalen Ebene (Figur 3) bzw. in Aufsicht bei abgenommener Verkleidung (Figur 4) zeigen;
- Figur 5 und 6: sind Skizzen, die ein drittes Ausführungsbeispiel der Erfindung im Schnitt in einer senkrechen, zur Führungsrichtung des Ständers (68) parallelen Ebene (Figur 6) bzw. einer vertikalen, zur Führungsrichtung des Ständers (68) senkrechten Ebene bei abgenommener Verkleidung (Figur 5) zeigen;
- Figur 7: ist ein vereinfachtes Blockschaltbild der für das Koordinatenmeßgerät nach Figur 1 und 2 verwendeten Steuerung.

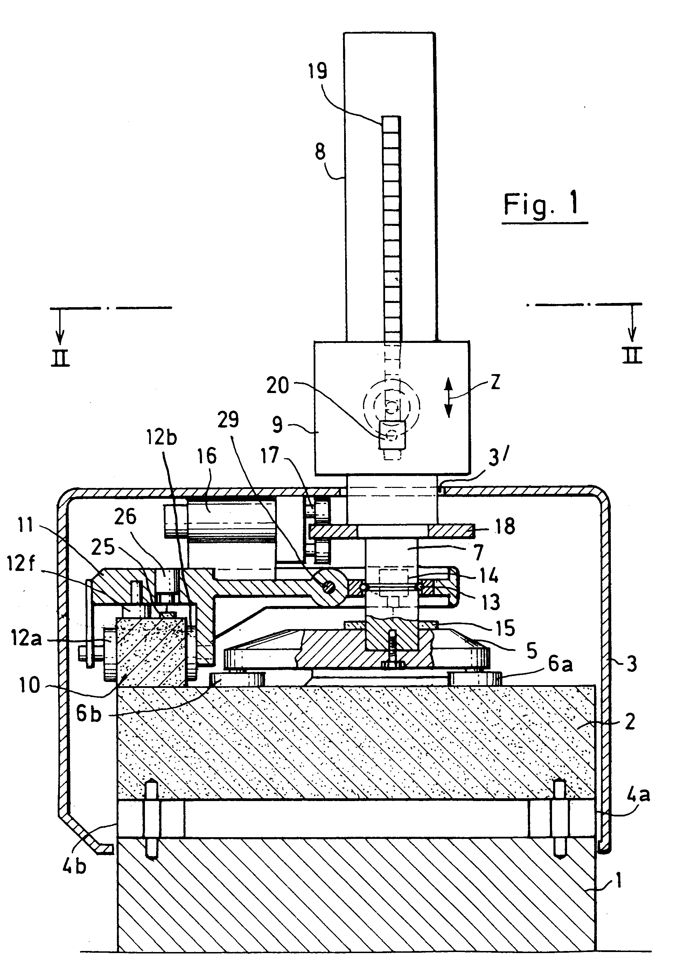

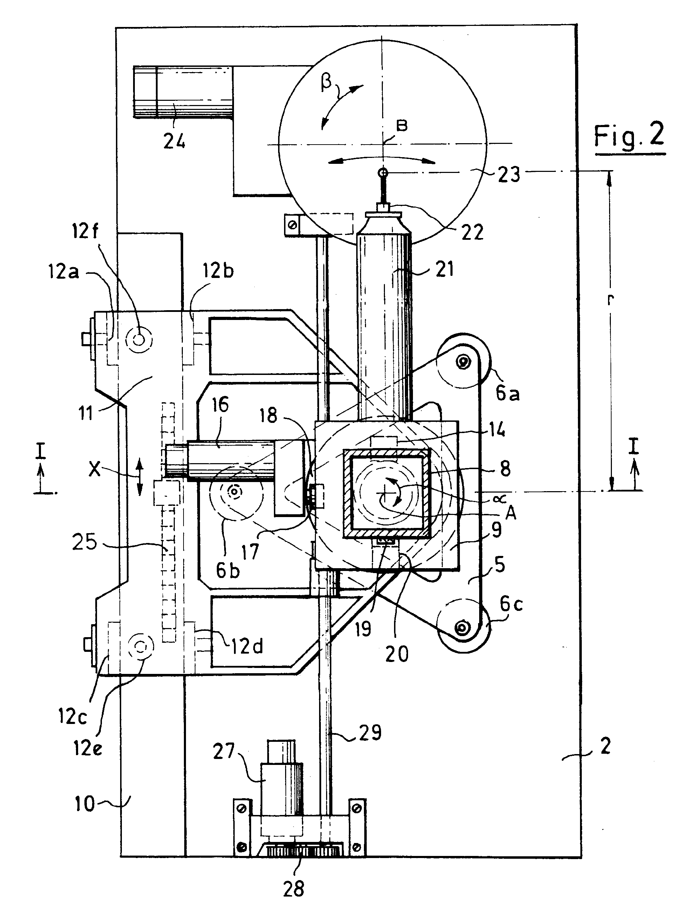

Das in Figur 1 und 2 dargestellte Koordinatenmeßgerät besitzt einen Maschinentisch (2), der mittels vier Schwingungsdämpfer auf dem Fundament (1) der Maschine ruht. In der Darstellung nach Figur 1 sind nur die beiden Schwingungsdämpfer (4a) und (4b) zu sehen.

Die Oberfläche des Tisches (2) bildet eine ebene Führung für einen Ständer (8), der sich dort mit seinem Fuß (5) über drei Luftlager (6a-c) abstützt und wie noch beschrieben wird linear verschieblich und drehbar auf der Tischoberfläche geführt ist.

An einer seitlich auf dem Tisch (2) befestigten Führungsleiste (10) ist mittels sechs Luftlager (12a-f) ein Schlitten (11) in Richtung des Pfeils (x) linear beweglich geführt. Dieser Schlitten (11) wird über einen Motor (27) und ein Getriebe (28) von einer Welle (29) angetrieben. Die Drehbewegung der glatten Welle (29) kann beispielsweise durch ein sogenanntes Rollringgetriebe am Schlitten (11) auf diesen übertragen sein. Solche Antriebe sind an sich bekannt. Die Bewegung des Schlittens wird durch einen photoelektrischen Geber (26) erfaßt, der einen auf der Führungsleiste (10) befestigten Maßstab (25) abtastet.

In dem Schlitten (11) ist der Ständer (8) im Bereich des zylindrischen Zwischenstücks (7), das ihn mit seinem Fuß (5) verbindet, in ein Radiallager (13) eingesetzt. Dieses Radiallager (13) ermöglicht es, den Ständer (8) gegenüber dem Schlitten (11) entsprechend dem Pfeil (α) in Figur 2 um die dort mit (A) bezeichnete Achse zu drehen. Achsial stützt sich hierbei der Ständer (8) auch hinsichtlich der Drehbewegung über die Luftlager (6a-c) auf der Oberfläche des Tisches (2) ab. Hierbei verhindert die relativ große Basis dieses Achsiallagers ein Taumeln des Ständers (8) im Zuge der Drehbewegung ebenso wie ein Verkippen während der Linearbewegung durch den Schlitten (11).

Für den Antrieb der Drehbewegung trägt der Schlitten (11) einen Motor (16), der über ein Reibradgetriebe (17) auf eine mit dem Ständer (8) verbundene Scheibe (18) wirkt. Das Ausmaß der Drehbewegung, d.h. der Drehwinkel (α) wird durch einen am Schlitten (11) befestigten photoelektrischen Geber (14) gemessen. Dieser tastet einen auf dem Fuß (5) des Ständers (8) befestigten Teilkreis (15) ab.

Die Antriebe und Meßsysteme im unteren Bereich des Ständers (8) sind durch eine Abdeckung (3) verkleidet, die im oberen Teil, an der Stelle, an der der Ständer (8) durch die Abdeckung (3) hindurchgreift, einen sich in Führungsrichtung (x) erstreckenden Schlitz besitzt. In dem Bereich oberhalb der Abdeckung (3) ist der Ständer (8) rechteckig geformt und an ihm ist ein Vertikalschlitten (9) in Richtung des mit (z) bezeichneten Pfeils verschiebbar gelagert. Der Schlitten (9) trägt den Meßarm (21) des Koordinatenmeßgerätes, an dessen vorderes Ende der Tastkopf (22) angesetzt ist. Die Linearbewegung des Schlittens (9) wird mit Hilfe eines photoelektrischen Gebers (20) und eines an der Säule (8) befestigten Maßstabs (19) gemessen. Der Antrieb für den Schlitten (9) ist in den Figuren nicht dargestellt.

Auf der dem Tastkopf (22) zugewandten Seite ist in den Tisch (2) ein Drehtisch (23) mit einem Antrieb (24) eingebaut. Die Drehachse dieses Drehtisches ist mit (B) bezeichnet. Die Verbindungslinie der beiden Achsen (A) des Ständers (8) und (B) des Drehtisches verläuft parallel zur Führungsrichtung (x) des Schlittens (11). Der Drehtisch (23) nimmt das zu vermessende Werkstück auf.

Zur Vermessung eines Werkstückes wird der Tastkopf (22) mit Hilfe der Schlitten (11) und (9) bzw. deren Antriebe in den beiden orthogonalen Koordinatenrichtungen (x) und (z) verfahren. Die dritte fehlende Koordinatenrichtung (y) ist ersetzt durch eine Schwenkbewegung des Ständers (8) um die Achse (A). Hierbei führt der Tastkopf eine entsprechend der Hebellänge (r) des Meßarmes mehr oder minder stark gekrümmte Tangentialbewegung aus. Diese Tangentialbewegung ist jedoch dann, wenn der Meßarm entsprechend lang ausgebildet ist, bzw. gleichzeitig zusätzlich noch eine Drehbewegung des Werkstücks mit Hilfe des Drehtisches (23) um die Achse (B) erfolgt, völlig ausreichend. Denn es ist sichergestellt, daß alle am Werkstück zu vermessenden Punkte mit dem Tastkopf (22) erreicht werden. Die Schwenkbewegung des Meßarms (21) um die erforderlichen Winkelbeträge erfolgt wegen der geringen zu bewegenden Trägheitsmomente äußerst schnell.

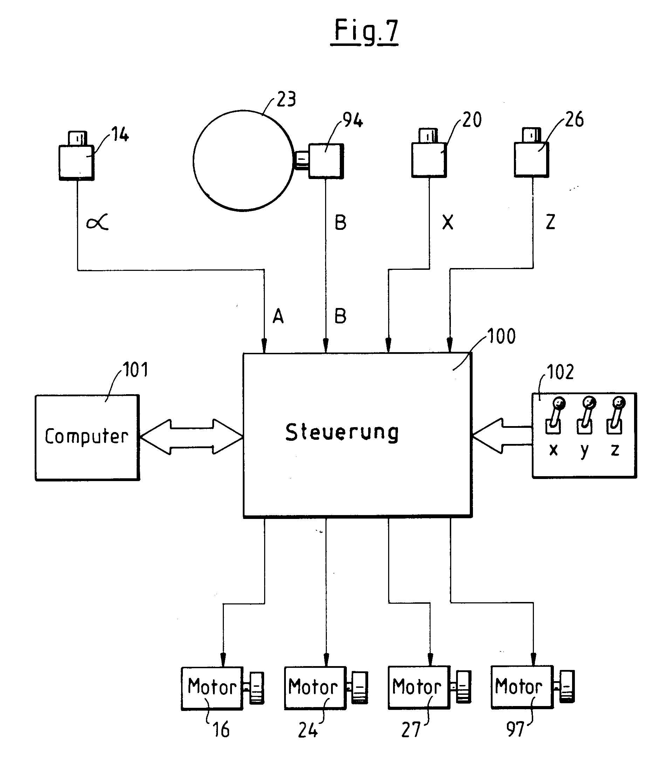

Die Steuerung der Bewegungsabläufe in dem neuen Koordinatenmeßgerät erfolgt durch ein spezielles Steuerungsmodul (100) (siehe Figur 7), an das der Computer (101) des Koordinatenmeßgerätes sowie das Bedienpult (102) angeschlossen sind. Mit diesem gibt der Benutzer die gewünschten Bewegungen wie gewohnt in drei orthogonalen linearen Bewegungsrichtungen (x), (y) und (z) vor. An die Steuerung (100) sind außerdem die photoelektrischen Geber (20) und (26) angeschlossen, von denen die Linearbewegungen (x) des Schlittens (11) und (z) des Schlittens (9) messen werden, sowie die photoelektrischen Winkelgeber (14) für den Drehwinkel (α) der Säule (8) und (94) für den Drehwinkel (B) des Drehtisches (23). Die Steuerung (100) ist außerdem mit dem Antriebsmotor (16) zur Drehung des Ständers (8), dem Motor (24) des Drehtisches (23) und dem Motor (27) für den Schlitten (11) sowie dem in den Figuren 1 und 2 nicht dargestellten Motor (97) für die z-Bewegung des Schlittens (9) verbunden. Durch eine entsprechende Programmierung der Steuerung läßt sich erreichen, daß eine Bewegung in der nicht direkt realisierten linearen Koordinate (y) durch eine Überlagerung der Drehbewegungen (α) und (β) von Ständer und Drehtisch sowie der Linearbewegung (x) des Schlittens (11) herbeigeführt wird. Dies ermöglicht es dem Benutzer, die Maschine z.B. in den Phasen der Lernprogrammierung von Hand wie gewohnt entlang dreier orthogonaler Achsen (x), (y) und (z) zu steuern.

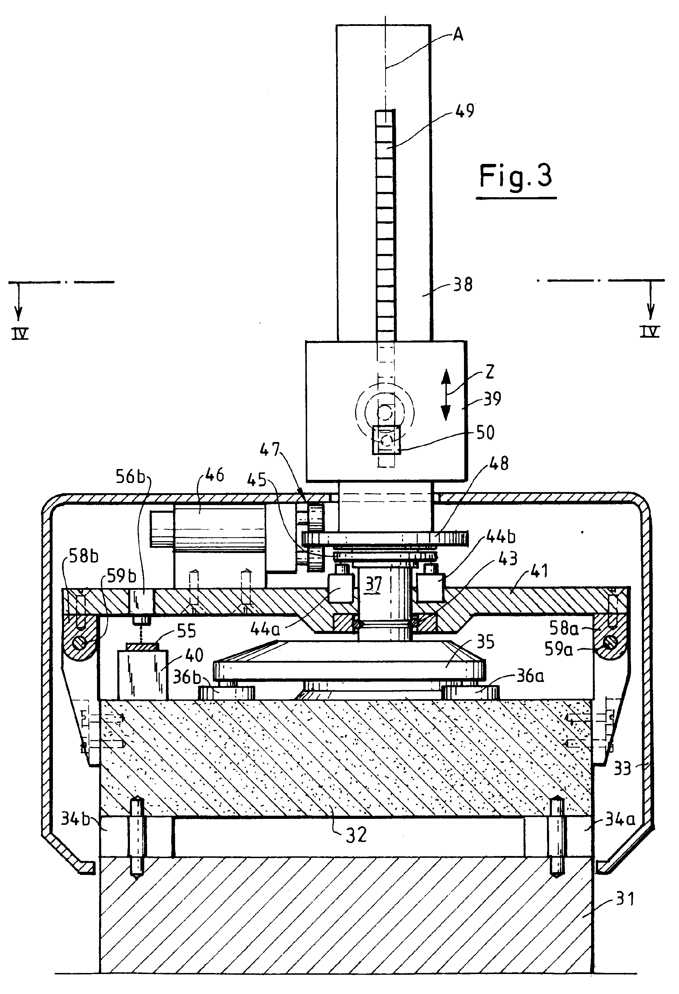

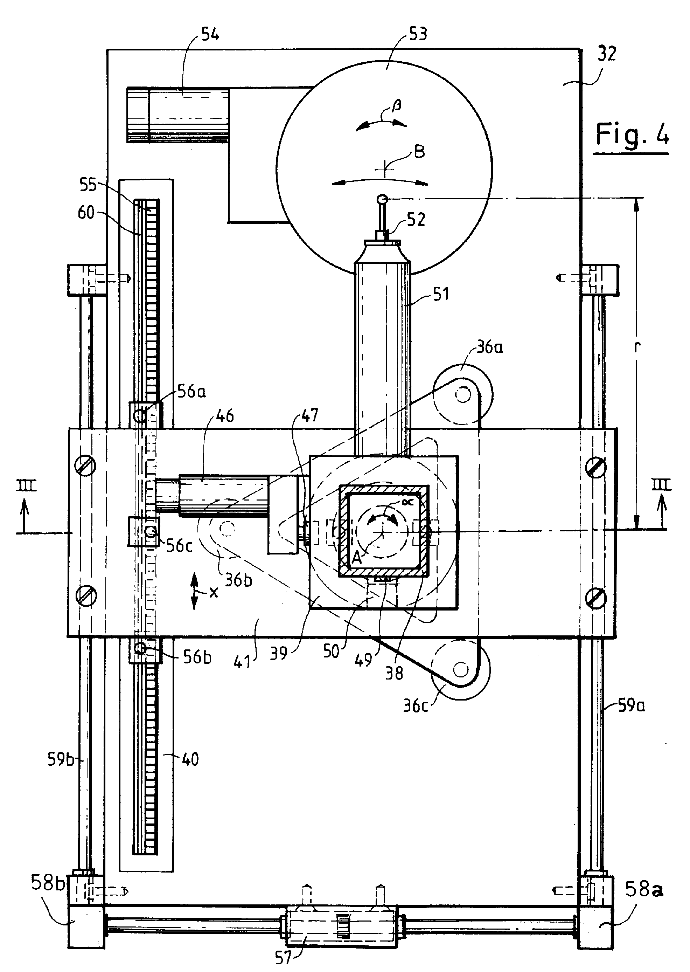

Das Koordinatenmeßgerät im Ausführungsbeispiel nach Figur 3 und 4 ist gegenüber dem in Figur 1 und 2 nur wenig modifiziert. Gleiche Teile mit gleicher Funktion sind mit um dreißig höheren Bezugsziffern versehen und werden an dieser Stelle nicht nochmals erklärt. Ein Unterschied gegenüber dem Ausführungsbeispiel in Figur 1 und 2 besteht darin, daß der in Figur 3 und 4 mit (41) bezeichnete, waagerecht in x-Richtung verschiebbare Schlitten beidseitig durch zwei Linearantriebseinheiten (58a) und (58b) angetrieben ist, die über eine Welle mit einem gemeinsamen Antriebsmotor (57) gekoppelt sind. Solche Linearantriebseinheiten sind an sich bekannt und bestehen beispielsweise aus selbsttragenden Metallprofilen (59a, 59b) mit integrierter Führung für das verschiebliche Teil sowie einem umlaufenden Zahnriemen.

Von diesen Linearantriebseinheiten wird der relativ leicht gebaute Schlitten (41) bewegt.

Aufgrund dieser Bauweise kann es nun zu Versatz des Schlittens (41) senkrecht zur Führungsrichtung (x) und zu Verdrehungen um die Vertikale kommen. Ohne besondere zusätzliche Maßnahmen wäre die Position des Tastkopfes (52) am Meßarm (51) des Koordinatenmeßgerätes nicht sicher bestimmt. Deshalb ist auf einem Maßstabsträger (40) auf einer Seite des durch den Schlitten (41) verschiebbaren Ständers (38) ein Maßstab (55) angeordnet, der eine zusätzliche Korrekturspur (60) in Form von mehreren, sich längs der Führungsrichtung erstreckenden Linien trägt. Diese Korrekturspur wird von zwei photoelektrischen Gebern (56a) und (56b) abgetastet. Die Positionsfehler des Tastkopfes (52) aufgrund von Verdrehungen des Schlittens (41) um die Vertikale lassen sich durch eine Differenzbildung der Meßwerte der beiden Geber (56a) und (56b) ermitteln und in an sich bekannter Weise zur Korrektur der Position des Tastkopfes (52) heranziehen, indem die gemessene Differenz mit dem Verhältnis des Abstandes (r) zwischen Tastkopf (52) und Drehachse (A) zum Abstand zwischen den beiden Gebern (56a) und (56b) multipliziert wird. Der Versatz des Schlittens (41) senkrecht zur Führungsrichtung (x) wird durch Mittelwertbildung der Signale der beiden Geber (56a, 56b) erfaßt. Ein dritter photoelektrischer Geber (56c) tastet die eigentliche Maßstabsspur ab und liefert das Signal für die Position in Richtung (x).

Das Koordinatenmeßgerät nach Figur 3 und 4 besitzt außerdem zwei photoelektrische Geber (44a) und (44b) für die Abtastung des Teilkreises (37), der die Drehbewegung des Ständers (38) und die Achse (A) mißt. Diese Doppelabtastung dient ebenso wie die Messung von Versatz und Rotation des Schlittens (41) dazu, die Meßgenauigkeit des Gerätes zu steigern.

Die Steuerung dieses Gerätes erfolgt im wesentlichen ebenso wie anhand von Figur 7 beschrieben, wobei jedoch zusätzlich die Meßwerte der Korrektursysteme mit erfaßt und zur Berechnung der Lage des Tastelements am Tastkopf (52) herangezogen werden. Zusätzlich werden systematische Abweichungen der Meßwerte in einem vorgeschalteten Kalibrierprozess ermittelt und als Korrekturwerte für die Berechnung der Position des Tastelements im Rechner des Koordinatenmeßgerätes abgelegt.

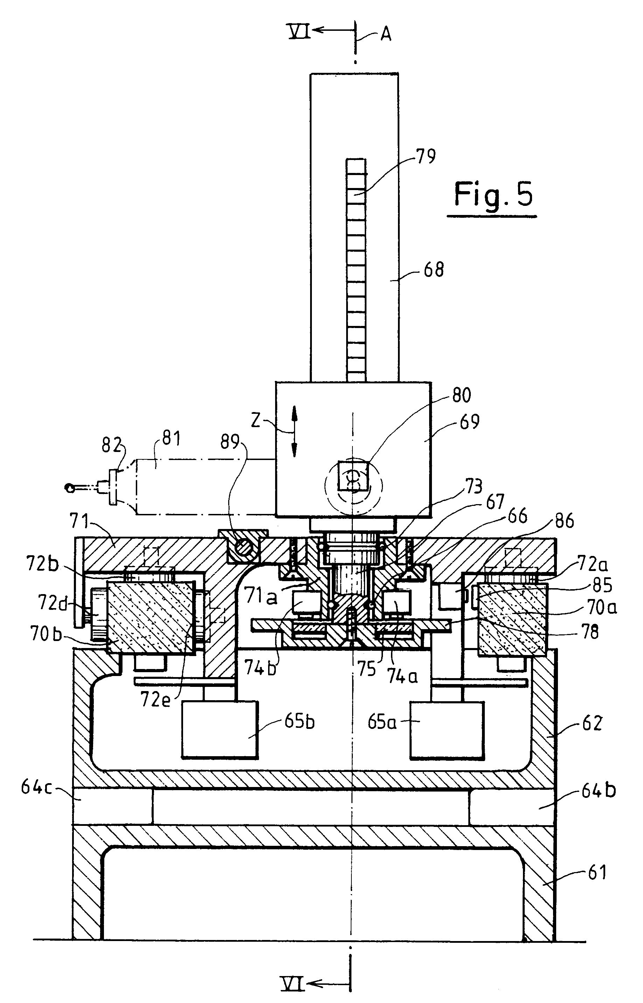

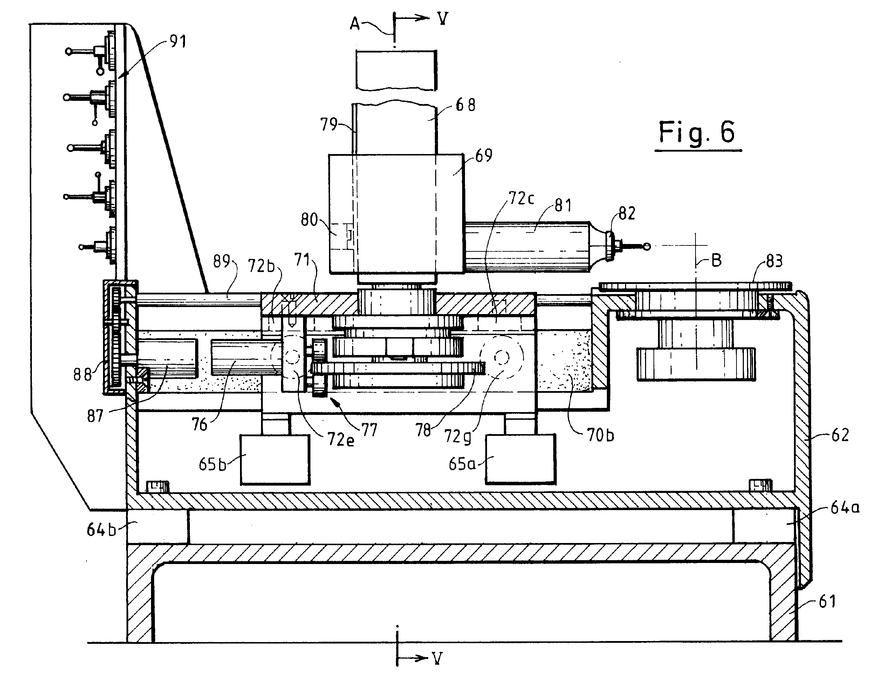

Das Gerät nach Figur 3 und 4 ist im Schlitten (41) wieder nur durch ein einfaches Radiallager (43) drehbeweglich gelagert und stützt sich achsial wieder über drei Luftlager (36a-c) im Fuß (35) des Ständers (38) direkt auf dem Tisch (32) ab. Hingegen ist im dritten Ausführungsbeispiel nach Figur 5 und 6 für die Lagerung des Ständers (68) eine andere Lösung gewählt.

Das dort dargestellte Koordinatenmeßgerät besitzt keinen ebenen Maschinentisch. Dort wird vielmehr von den vier Schwingungsdämpfern (64a-d) ein U-förmiges Trägerteil (62) gehalten, auf dessen Oberseite zwei parallele Führungsleisten (70a) und (70b) befestigt sind. Auf diesen Führungsleisten (70a) und (70b) liegt beidseitig über ein Luftlager (72a) auf der Leiste (72a) und zwei Luftlager (72b) und (72c) auf der Leiste (72b) ein Schlitten (71) auf, der durch eine Antriebsspindel (89) entlang des mit (x) bezeichneten Pfeils verschoben werden kann. Die Seitenführung des Schlittens (71) wird durch vier paarweise gegeneinander verspannte Luftlager (72d / 72e) und (72f / 72g) in Verbindung mit den Seitenflächen der Führungsleiste (70b) gebildet.

Zentrisch ist in den Schlitten (71) ein komplettes Drehlager (71a) eingesetzt, das sowohl Radiallager- als auch Achsiallagerfunktion ausführt. Diese Funktionen sind durch die beiden mit (73) und (66) bezeichneten Wälzlagerringe symbolisiert. An den unteren Teil des zylindrischen Fußes (67) des Ständers (68) ist ein ringförmiges Bauteil (78) angeschraubt, das zum einen den Teilkreis (75) zur Messung der Drehbewegung (α) um die Achse (A) trägt, und an dem zum anderen der Antrieb (76) mit dem Reibradgetriebe (77) für die Drehbewegung angreift. Auch hier dienen wieder zwei um 180° versetzte photoelektrische Geber (74a) und (74b) an dem mit dem Schlitten (71) verbundenen Teil (71a) des Drehlagers zur Teilkreisabtastung. Die Linearbewegung des Schlittens (71) wird mit dem photoelektrischen Geber (86) gemessen, der einen an der Führungsleiste (70a) angebrachten Maßstab (85) abtastet.

Da bei diesem Ausführungsbeispiel der Schwerpunkt des Ständers (68) relativ hoch liegt und keine große Basis zum Abfangen von Kippbewegungen vorhanden ist, sind an die Unterseite des Schlittens (71) vier Ausgleichsgewichte (65a-d) angehängt, die dafür sorgen, daß der Schwerpunkt alter von der Spindel (89) angetriebenen Teile in etwa dort liegt, wo auch der Antrieb am Schlitten (71) angreift. Dadurch wird einem Verkippen des Ständers (68) im Zuge der Schlittenbewegung vorgebeugt.

Wie aus der Darstellung nach Figur 6 hervorgeht, besitzt das Koordinatenmeßgerät auf der Seite, die dem Drehtisch (83) in Bezug auf den Ständer (68) entgegengesetzt ist, ein vertikal ausgerichtetes Magazin (91) für verschiedene, in einer entsprechend der Aufnahme am Tastkopf (82) einzuwechselnde Taststifte. Dieses Magazin ist so ausgerichtet, daß die Taststifte dort vom Meßarm (81) durch eine reine Linearbewegung entlang der Achse (x) angefahren werden können. Das ist möglich, nachdem der Meßarm (81) aus der in Figur 6 gezeichneten Stellung im Meßbereich durch Drehung um die Achse (A) durch den Antrieb (76) nach hinten so umgeschlagen ist, daß der Meßarm (81) parallel zur Richtung (x) ausgerichtet in Verlängerung auf den einzuwechselnden Taster zeigt. Ein derartiges Magazin können auch die in den Figuren 1-4 dargestellten Koordinatenmeßgeräte besitzen.

Die übrigen hier nicht für dieses Ausführungsbeispiel beschriebenen Teile entsprechen in ihrer Funktion denen im Ausführungsbeispiel nach Figur 1 und 2 und besitzen deshalb eine um sechzig höhere Bezugsziffer.

## Patentansprüche

1. Koordinatenmeßgerät mit einem linear in einer Richtung verfahrbaren Ständer (8; 38; 68), an dem ein Meßarm (21; 51; 81) vertikal verschiebbar geführt ist, wobei der Ständer (8; 38; 68) um eine Achse (A) drehbar an einem in einer ersten waagerechten Richtung linear geführten Schlitten (11; 41; 71) gelagert ist, dadurch gekennzeichnet, daß das Koordinatenmeßgerät nur zwei lineare Meßachsen besitzt und die dritte Meßachse durch ein Drehlager ersetzt ist, derart, daß die Bewegung des Tastkopfes in der zweiten waagerechten Richtung durch eine Drehbewegung des Ständers (8; 38; 68) herbeigeführt wird, und daß der Schlitten (11; 41; 71) Antriebe (16, 17; 46, 47; 76, 77) und Meßsysteme (14; 44a, b; 74a, b) für die Einleitung bzw. Erfassung der Drehbewegung des Ständers trägt.

2. Koordinatenmeßgerät nach Anspruch 1, dadurch gekennzeichnet, daß das Koordinatenmeßgerät einen Drehtisch (23; 53; 83) enthält, auf dem das zu vermessende Werkstück um eine zweite Achse (B) drehbar ist.

3. Koordinatenmeßgerät nach Anspruch 2, dadurch gekennzeichnet, daß die Verbindungslinie der beiden Drehachsen (A, B) im wesentlichen zur Antriebsrichtung (x) des Schlittens parallel ist.

4. Koordinatenmeßgerät nach Anspruch 1, dadurch gekennzeichnet, daß der Ständer (8, 38) im Schlitten (11, 41) allein radial gelagert ist und sich achsial auf einem die Führung für den Schlitten tragenden, feststehenden Geräteteil (2; 32) abstützt.

5. Koordinatenmeßgerät nach Anspruch 4, dadurch gekennzeichnet, daß sich der Ständer achsial auf drei Luftlagern (6a-c; 36a-c) abstützt.

6. Koordinatenmeßgerät nach Anspruch 1, dadurch gekennzeichnet, daß der Ständer (68) im Schlitten (71) radial und achsial gelagert ist.

7. Koordinatenmeßgerät nach Anspruch 1, dadurch gekennzeichnet, daß der Schlitten (41) Meßsysteme (55, 56a, b, c) enthält, die seinen Versatz in der Horizontalen senkrecht zur Führungsrichtung bzw. seine Verdrehung um die Vertikale messen.

8. Koordinatenmeßgerät nach Anspruch 1, dadurch gekennzeichnet, daß das Koordinatenmeßgerät ein vertikal ausgerichtetes Tastermagazin (91) besitzt.

9. Koordinatenmeßgerät nach Anspruch 2 und 8, dadurch gekennzeichnet, daß das Magazin (91) auf der bezogen auf die Drehachse (A) des Ständers (68) dem drehbaren Werkstücktisch (83) entgegengesetzten Seite des Koordinatenmeßgerätes aufgestellt ist.

10. Koordinatenmeßgerät nach Anspruch 1, dadurch gekennzeichnet, daß das Koordinatenmeßgerät eine Steuerung (100) besitzt, die Bewegungen des am Meßarm (21) befestigten Tasters (22) relativ zum Werkstück in einer horizontalen, im wesentlichen senkrecht zur Führungsrichtung des Schlittens (11) verlaufenden Richtung (y) durch eine über lagerte Drehbewegung des Ständers (8) und des Werkstücktisches (23) bzw. der Linearbewegung (x) des Schlittens (11) herbeiführt.

11. Koordinatenmeßgerät nach Anspruch 1, dadurch gekennzeichnet, daß der Rechner (101) des Koordinatenmeßgerätes einen Speicher besitzt, in dem systematische Abweichungen der Positionsmeßwerte von der tatsächlichen Istposition als Korrekturparameter abgelegt sind.

## Claims

1. A coordinate-measuring machine having a column (8; 38; 68) which is moveable linearly in one direction, on which a measurement arm (21; 51; 81) is guided in vertically displaceable manner, and which column (8; 38; 68) is mounted for rotation around an axis (A) in a linearly guided carriage (11; 41; 71), characterized by the fact that the coordinate measuring machine has only two linear measuring axes, its third axis beeing replaced by a rotary bearing such that displacement of the probe in a second horizontal direction is effected by a rotation of the column (8; 38; 68); and that the carriage (11; 47; 71) bears drives (16, 17; 46, 47; 76, 77) and measurement systems (14; 44a, b; 74a, b) for the introduction and detection of the rotary movement of said column, respectively.

2. A coordinate-measuring machine according to Claim 1, characterized by the fact that the coordinate-measuring machine contains a rotary table (23; 53; 83) on which the workpiece to be measured is turnable around a second axis (B).

3. A coordinate-measuring machine according to Claim 2, characterized by the fact that the line connecting the two axes of rotation (A, B) is substantially parallel to the direction of drive (x) of the carriage.

4. A coordinate-measuring machine according to Claim 1, characterized by the fact that the column (8, 38) is mounted only radially in the carriage (11, 41) and rests axially on a stationary machine part (2; 32) which bears the guide for the carriage.

5. A coordinate-measuring machine according to Claim 4, characterized by the fact that the column rests axially on three air bearings (6a-c; 36a-c).

6. A coordinate-measuring machine according to Claim 1, characterized by the fact that the column (68) is mounted radially and axially in the carriage (71).

7. A coordinate-measuring machine according to Claim 1, characterized by the fact that the carriage (41) contains measurement systems (55, 56a, b, c) which measure its displacement in the horizontal perpendicular to the direction of guidance and/or its rotation around the vertical.

8. A coordinate-measuring machine according to Claim 1, characterized by the fact that the coordinate-measuring machine has a vertically aligned probe magazine (91).

9. A coordinate-measuring machine according to Claims 2 and 8, characterized by the fact that the magazine (91) is arranged on the side of the coordinate-measuring machine which is opposite the rotatable workpiece table (83) referred to the axis of rotation (A) of the column (68).

10. A coordinate-measuring machine according to Claim 1, characterized by the fact that the coordinate-measuring machine has a control (100) which produces movements of the probe (22), fastened on the measurement arm (21), relative to the workpiece in a horizontal direction (y) extending substantially perpendicular to the direction of guidance of the carriage (11), by a superimposed rotary movement of the column (8) and of the workpiece table (23) and/or the linear movement (x) of the carriage (11).

11. A coordinate-measuring machine according to Claim 1, characterized by the fact that the computer (101) of the coordinate-measuring machine has a memory in which systematic deviations of the position measurement values from the actual position are stored as correction parameters.

## Revendications

1. Centre de mesure à coordonnées avec un montant à déplacement linéaire dans une direction (8, 38; 68), sur lequel coulisse à la verticale un bras de mesure (21; 51; 71), le montant (8; 38; 68) pouvant tourner autour d'un axe (A) est logé dans une glissière (11; 41;71) guidé de façon linéaire dans une première direction horizontale; le tout caractérisé par le fait que le centre de mesure à coordonnées ne possède que deux axes de mesure linéaire et que le troisième axe de mesure est remplacé par un palier de rotation, de telle façon que le mouvement de la tête de palpage dans la seconde direction horizontale est produit par un mouvement de rotation du montant (8; 38; 68) et que la glissière (11; 41; 71) porte les moteurs (16, 17; 46, 47; 76, 77) et les systèmes de mesure (14; 44a, b; 74a, b) pour entraîner, voire saisir le mouvement de rotation du montant.

2. Centre de mesure à coordonnées conformément à la revendication 1, caractérisé par le fait que le centre de mesure à coordonnées comporte un plateau diviseur (23; 53; 83) sur lequel l'objet à mesurer tourne autour d'un second axe (B).

3. Centre de mesure à coordonnées conformément à la revendication 2, caractérisé par le fait que la ligne qui relie les deux axes de rotation (A, B) est, pour l'essentiel, parallèle à la direction de déplacement (x) de la glissière.

4. Centre de mesure à coordonnées conformément à la revendication 1, caractérisé par le fait que le montant (8, 38) repose seul radialement dans la glissière (11, 41) et qu'il s'appuie axialement sur une partie fixe (2; 32) qui porte le guidage pour la glissière.

5. Centre de mesure à coordonnées conformément à la revendication 4, caractérisé par le fait que le montant repose axialement sur trois paliers pneumatiques (6a-c; 36a-c).

6. Centre de mesure à coordonnées conformément à la revendication 1, caractérisé par le fait que le montant (68) repose radialement et axialement dans la glissière (71).

7. Centre de mesure à coordonnées conformément à la revendication 1, caractérisé par le fait que le montant (41) porte des systèmes de mesure (55, 56a, b, c), qui mesurent son déport dans le plan horizontal perpendiculairement à la direction de guidage, voire sa torsion autour de la verticale.

8. Centre de mesure à coordonnées conformément à la revendication 1, caractérisé par le fait que le centre de mesure à coordonnées comporte un magasin porte-palpeurs (91) dégauchi verticalement.

9. Centre de mesure à coordonnées conformément aux revendications 2 et 8, caractérisé par le fait que, si l'on se rapporte à l'axe de rotation (A) du montant (68), le magasin (91) est monté sur le côté du centre de mesure opposé au plateau diviseur (83).

10. Centre de mesure à coordonnées conformément à la revendication 1, caractérisé par le fait que le centre de mesure comprend une commande (100) qui commande les déplacements relatifs du palpeur (22) fixé au bras de mesure (21) par rapport à la pièce, dans une direction (y) horizontale, pour l'essentiel perpendiculaire à la direction de guidage de la glissière (11), par le fait d'un mouvement de rotation conjugué du montant (8) et de la table (23), voire du mouvement linéaire (x) de la glissière (11).

11. Centre de mesure à coordonnées conformément à la revendication 1, caractérisé par le fait que l'ordinateur (101) du centre de mesure contient une mémoire dans laquelle sont enregistrés les écarts systématiques entre les positions mesurées et les positions réelles, en tant que paramètres de correction.
